# EUROPÄISCHE PATENTSCHRIFT

(11) **EP 2 502 081 B1**
(45) Veröffentlichungstag und Bekanntmachung des Hinweises auf die Patenterteilung: **23.10.2013**
(21) Anmeldenummer: 10781477.4
(22) Anmeldetag: 11.11.2010
(51) Int. Cl.: G01N 35/02, G01N 35/10

(54) **KONFIGURATION UND ARBEITSWEISE EINER AUTOMATISIERTEN ANALYSEVORRICHTUNG**
CONFIGURATION AND OPERATION MODE OF AN AUTOMATED ANALYTIC DEVICE
CONFIGURATION ET MODE DE FONCTIONNEMENT D'UN DISPOSITIF D'ANALYSE AUTOMATISE

(30) Priorität: 17.11.2009 DE 102009046762
(43) Veröffentlichungstag der Anmeldung: 26.09.2012
(73) Patentinhaber: Diasys Technologies S.A.R.L., 34830 Clapiers (FR)
(72) Erfinder: SCHENK, Roland, 67281 Kirchheim (DE)
(74) Vertreter: WSL Patentanwälte Partnerschaftsgesellschaft
(86) Internationale Anmeldenummer: PCT/EP2010/067330
(87) Internationale Veröffentlichungsnummer: WO 2011/061118

(56) Entgegenhaltungen:
- DE-A1- 19 534 955
- DE-A1- 19 701 505
- US-A1- 2002 025 275
- US-A1- 2004 224 351
- US-B1- 6 190 617

## Beschreibung

Die vorliegende Erfindung betrifft eine Vorrichtung für die automatisierte Analyse von Flüssigkeiten, wobei diese Analysevorrichtung einen Probenrotor für Probenbehälter, einen Reagenzienrotor für Reagenzienbehälter und einen Prozessrotor für Prozessbehälter aufweist, sowie wenigstens eine Pipettiervorrichtung zum Überführen von Flüssigkeiten, eine Mischvorrichtung zum Mischen des Prozessgemisches, eine Messvorrichtung zum Messen eines Messparameters des Prozessgemisches und eine Spülvorrichtung zum Spülen von Prozessbehältern.

Im Rahmen der zunehmenden Automatisierung auf dem Gebiet der medizinischen und veterinärmedizinischen Diagnostik werden zunehmend Vorrichtungen für die automatisierte Analyse von Flüssigkeiten, sogenannte Analysatoren, eingesetzt, die ein für die Durchführung einer Analyse erforderliches Reagenz aus einem Reagenzienbehälter entnehmen und mit einer Probe zum Zwecke der Durchführung der Analyse in einem Prozessbehälter vereinigen können. Hierfür weisen die Analysatoren häufig einen Probenrotor für Probenbehälter, einen Reagenzienrotor für Reagenzienbehälter und einen Prozessrotor für Prozessbehälter auf, in denen entsprechende Aufnahmebereiche für die jeweiligen Behälter vorgesehen sind. Werden in einem Prozess zwei verschiedene Reagenzien benötigt, sind üblicherweise dementsprechend zwei Reagenzienrotoren vorgesehen. Die vorgenannten Rotoren können in der Regel unabhängig voneinander von einer in dem Analysator vorgesehenen Antriebsvorrichtung zur Ausführung einer Drehbewegung der Rotoren angetrieben werden.

Die Entnahme von Reagenz bzw. Probe und das Überführen in einen Prozessbehälter wird üblicherweise von einer automatischen Pipettiervorrichtung vorgenommen. Eine solche automatische Pipettiervorrichtung umfasst häufig einen Pipettierarm, an dem eine Pipettiernadel angeordnet ist, die wiederum mit einer Pumpeinheit verbunden ist, mit der eine Flüssigkeit in die Pipettiernadel aufgezogen und aus der Pipettiernadel auch wieder ausgestoßen werden kann. Ein solcher Pipettierarm ist in der Regel so ausgestaltet, dass mit dem Pipettierarm die Pipettiernadel über einen Arbeitsbereich bewegt werden kann, in welchem Arbeitsbereich die Reagenzienbehälter, Probenbehälter und/oder Prozessbehälter durch den entsprechenden Rotor vorübergehend bereitgestellt werden.

Des weiteren können Analysatoren außerdem eine Messvorrichtung zum Bestimmen einer physikalischen oder chemischen Größe (Prozessparameter) eines in einem Prozessbehälter angesetzten Prozessgemisches enthalten. Der Prozessbehälter kann z. B. eine Küvette sein, die zumindest vorübergehend in den Strahlengang eines in dem Analysator angeordneten Photometers eingebracht werden kann.

Darüber hinaus können Analysatoren eine Mischvorrichtung zum Mischen des Prozessgemisches und eine Spülvorrichtung zum Spülen von Prozessbehältern umfassen sowie eine Steuerungseinheit zum Steuern der Bewegungen von Pipettierarmen und/oder Rotoren, sowie eine Datenverarbeitungsvorrichtung zum Einrichten und Ausführen eines Analysenprogramms sowie zum Verarbeiten und Ausgeben eines gemessenen Prozessparameters.

In US 2004/0224351 A1 wird eine automatisierte Analysevorrichtung beschrieben, die Messeinrichtungen umfasst, mit denen eine aus einem Analyten entnommene Probe mit einem Reagenz umgesetzt werden kann, die Reaktionslösung vermessen werden kann und eine Vielzahl von Messungen für verschiedene Tests erzeugt werden können. Diese Analysevorrichtung umfasst einen Probenbereich, zum Aufnehmen mehrerer Proben, einen Reagenzienbereich zum Aufnehmen mehrerer Reagenzien, einen Reaktionsbereich zum Umsetzen einer Probe mit einem Reagenz und zum Messen der Reaktionslösung sowie insgesamt vier Pipettiervorrichtungen zum Austausch von Flüssigkeiten zwischen den genannten Bereichen.

DE 197 01 505 offenbart eine Vorrichtung zum Analysieren einer Vielzahl von Analysesubstanzen mit einem äußeren Flaschenhalter und einem inneren Flaschenhalter, die unabhängig voneinander in Drehung versetzt werden können. Darüber hinaus umfasst die Vorrichtung eine Probenplatte und eine Reaktionsplatte sowie drei Pipettiervorrichtungen zum Übertragen von Flüssigkeiten zwischen den genannten Bereichen.

In DE 195 34 955 A1 wird ein chemischer Analysator beschrieben, der Drehtische aufweist, die jeweils Reaktionsgefäße, Probenbehälter und Reagenzbehälter trägt, die darauf in Kreislinien angeordnet sind. Ein Probenpipettiermechanismus und ein Reagenzpipettiermechanismus sind vorgesehen, um bestimmte Mengen von Proben und Reagenzlösung zwischen den Bereichen zu transportieren.

Wie in vielen Bereichen besteht auch bei der automatisierten Analyse von Flüssigkeiten, wie z.B. von Blutproben, die Bestrebung die Leistungsfähigkeit der Automation zu steigern. Hier bedeutet dies, dass es gewünscht ist, dass ein Analysator einen möglichst hohen Probendurchsatz hat, d.h. möglichst viele Proben (wie z.B. Blutproben) pro Zeiteinheit analysieren kann. Gleichzeitig ist es gewünscht, dass die Geräte in den Labors, in denen sie zum Einsatz kommen, so wenig wie möglich Platz verbrauchen. Dies ist insbesondere bei solchen Analysatoren, die Analysen durchführen sollen, bei denen mehr als ein Reagenz zum Einsatz kommt, nur schwer zu realisieren, da üblicherweise für jedes verwendete Reagenz ein eigener Reagenzienrotor verwendet werden muss. Auch bei der Leistungssteigerung ist die Verwendung eines zweiten Reagenz hinderlich und führt häufig zu einem geringeren Probendurchsatz im Vergleich zu einer Analyse, bei der nur ein Reagenz zugesetzt werden muss.

Es besteht daher ein Bedarf nach einer Vorrichtung für die automatisierte Analyse von Flüssigkeiten, wobei bei der Analyse mehr als ein Reagenz zum Prozessgemisch zugegeben werden, und wobei die Vorrichtung so viele Proben pro Zeiteinheit wie möglich analysieren können soll und dabei dennoch möglichst platzsparend gestaltet sein soll. Nach Möglichkeit soll das Überführen der Reagenzien in einen bestimmten Prozessbehälter nacheinander und mit einem definierten zeitlichen Abstand erfolgen können.

Es ist die Aufgabe der vorliegenden Erfindung, eine Analysevorrichtung bereitzustellen, bei der für die Durchführung der Analyse mehr als ein Reagenz eingesetzt werden kann, wobei die Vorrichtung so viele Proben pro Zeiteinheit wie möglich analysieren können soll und dabei dennoch möglichst platzsparend gestaltet sein soll. Insbesondere sollen der Bereich, in dem die Reagenzienbehälter und/oder die Probenbehälter angeordnet sind und der Bereich, in dem die Prozessbehälter angeordnet sind, möglichst platzsparend gestaltet sein. Ziel ist es, in einer praktikablen Anordnung auf so wenig Raum wie möglich mehrere Proben mit jeweils mehr als einem Reagenz in Prozessbehältern mischen und die daraus resultierenden Prozessgemische analysieren zu können.

Diese Aufgabe wird gelöst durch die Verwendung einer automatisierten Analysevorrichtung mit den folgenden Komponenten:
a) genau drei Rotoren, nämlich einem Probenrotor für Probenbehälter, einem Reagenzienrotor für Reagenzienbehälter und einem Prozessrotor für Prozessbehälter,
b) einer ersten Pipettiervorrichtung zum Überführen eines ersten Reagenz aus den Reagenzienbehältern in die Prozessbehälter, einer zweiten Pipettiervorrichtung zum Überführen eines zweiten Reagenz aus den Reagenzienbehältern in die Prozessbehälter und einer dritten Pipettiervorrichtung zum Überführen der Probe aus den Probenbehältern in die Prozessbehälter,
c) einer am Prozessrotor angeordneten Mischvorrichtung zum Mischen des Prozessgemisches,
d) einer am Prozessrotor angeordneten Messvorrichtung zum Messen eines Messparameters des Prozessgemisches und
e) einer am Prozessrotor angeordneten Spülvorrichtung zum Spülen von Prozessbehältern,
wobei die Analysevorrichtung in aufeinanderfolgenden Arbeitszyklen arbeitet, bei denen der Prozessrotor um seine Rotationsachse gedreht wird, wobei in jedem Arbeitszyklus in verschiedenen Prozessbehältern an verschiedenen Positionen des Prozessrotors gleichzeitig die folgenden Operationen durchgeführt werden:
- Überführen einer Probe in einen Prozessbehälter,
- Überführen des ersten Reagenz in einen Prozessbehälter,
- Überführen des zweiten Reagenz in einen Prozessbehälter,
- Mischen des Prozessgemischs in einem Prozessbehälter,
- Messen eines Messparameters des Prozessgemischs in einem Prozessbehälter und
- Spülen wenigstens eines Prozessbehälters,
wobei die Rotation des Prozessrotors pro Arbeitszyklus höchstens zwei mal gestoppt wird, um eine Probe sowie das erste und das zweite Reagenz in einen Prozessbehälter zu überführen.

Im Analysebetrieb enthalten die Probenbehälter die zu analysierenden Proben. Die Probenbehälter sind entlang einer Kreisbahn des Probenrotors einer nach dem anderen in entsprechenden Aufnahmebereichen anordenbar.

Die Reagenzienbehälter enthalten im Analysebetrieb die für die Analyse der Proben benötigten Reagenzien und sind ebenfalls entlang einer Kreisbahn des Reagenzienrotors einer nach dem anderen in entsprechenden Aufnahmebereichen anordenbar. Bei einer bevorzugten Ausführungsform handelt es sich bei den Reagenzienbehältern um sogenannte Twin-Container, die zwei separate Kammern aufweisen, wobei in der einen Kammer das eine Reagenz und in der anderen Kammer das andere Reagenz enthalten ist. Solche Twin-Container sind ausführlich beschrieben in der internationalen Patentanmeldung mit der Veröffentlichungsnummer WO 2008/058979.

Im Analysebetrieb werden in den Prozessbehältern die Proben mit den Reagenzien unter Ausbildung eines Prozessgemisches in Kontakt gebracht. Die Prozessbehälter sind entlang einer Kreisbahn des Prozessrotors einer nach dem anderen in entsprechenden Aufnahmebereichen anordenbar. Die Prozessbehälter sind zur Messung eines Prozessparameters geeignet. Bei einer bestimmten Ausführungsform handelt es sich bei den Prozessbehältern um lichtdurchlässige Küvetten. Bei diesen Analysevorrichtung ist die Messvorrichtung dann vorzugsweise ein Photometer.

Die 3 Rotoren der Vorrichtung sind nebeneinander angeordnet, so dass die Rotationsachsen, um die diese Rotoren gedreht werden können, voneinander verschieden sind.

Bei den Pipettiervorrichtungen handelt es sich vorzugsweise um Pipettierarme, die um eine Rotationsachse schwenkbaren sind und die am distalen Ende des Schwenkarms eine Pipettiernadel aufweisen, wobei die Pipettiernadel mit einer Pumpeinheit verbunden ist, mit der eine Flüssigkeit in die Pipettiernadel aufgezogen und aus der Pipettiernadel auch wieder ausgestoßen werden kann. Der Pipettierarm kann die Pipettiernadel über einen Arbeitsbereich bewegen, in welchem Arbeitsbereich die Reagenzienbehälter, Probenbehälter und/oder Prozessbehälter durch den entsprechenden Rotor vorübergehend bereitgestellt werden.

Im Rahmen der Entwicklung der vorliegenden Erfindung wurde herausgefunden, dass es bei einer automatisierten Analyse, bei der mehr als ein Reagenz eingesetzt werden soll, für das Erreichen eines möglichst hohen Probendurchsatzes nicht erforderlich ist, zwei Reagenzienrotoren einzusetzen. Stattdessen kann bereits mit genau drei Rotoren, nämlich einem Probenrotor, einem Reagenzienrotor und einem Prozessrotor ein sehr hoher Probendurchsatz von bis zu 400 Proben pro Stunde erreicht werden, wenn man zwei Pipettiervorrichtungen zum Überführen von zwei verschiedenen Reagenzien vorsieht, und wenn die Analysevorrichtung in aufeinanderfolgenden Arbeitszyklen arbeitet, bei denen der Prozessrotor um seine Rotationsachse gedreht wird, wobei in jedem Arbeitszyklus in verschiedenen Prozessbehältern an verschiedenen Positionen des Prozessrotors gleichzeitig
- eine Probe in einen Prozessbehälter überführt wird,
- das erste Reagenz in einen Prozessbehälter überführt wird,
- das zweite Reagenz in einen Prozessbehälter überführt wird,
- das Prozessgemisch in einem Prozessbehälter gemischt wird,
- der Messparameter des Prozessgemischs in einem Prozessbehälter gemessen wird
- und wenigstens ein Prozessbehälter gespült wird,
wobei die Rotation des Prozessrotors pro Arbeitszyklus höchstens zwei mal gestoppt wird, um eine Probe und wenigsten zwei Reagenzien in einen Prozessbehälter zu überführen.

Das die oben aufgeführten Operationen "gleichzeitig" durchgeführt werden, ist hier so zu verstehen, dass all diese Operation während der Dauer eines Arbeitszyklus durchgeführt werden. Anders gesagt, werden zwar all diese Operationen in einem bestimmten Arbeitszyklus durchgeführt, wobei jedoch eine der Operationen vor einer anderen begonnen und/oder auch vor einer anderen Operation abgeschlossen werden kann, so dass nur ein zeitlicher Überlapp bei der Ausführung der zwei Operationen vorliegt. Im Extremfall kann eine der Operationen auch am Anfang des Arbeitszyklus begonnen und abgeschlossen werden und eine andere Operation am Ende des Arbeitszyklus begonnen und abgeschlossen werden, ohne das ein zeitlicher Überlapp zwischen diesen beiden Operationen vorliegt. "Gleichzeitig" bedeutet hier also zeitlich innerhalb eines bestimmten von einem Arbeitszyklus definierten Zeitraums. Vorzugsweise beträgt die Dauer eines Arbeitszyklus höchstens 15 Sekunden. Noch bevorzugter ist die Dauer eines Arbeitszyklus < 10 Sekunden.

Die vorliegende Erfindung hat den Vorteil, dass im Vergleich zum Stand der Technik bei der automatisierten Analyse von Flüssigkeiten unter Verwendung von wenigstens zwei verschiedenen Reagenzien ein Reagenzienrotor eingespart und dennoch ein außergewöhnlich hoher Probendurchsatz erreicht werden kann werden. Insbesondere wird erreicht, dass die Vorrichtung auf kleinstem Raum bis zu 400 Proben pro Zeiteinheit analysieren kann. Eine bevorzugte Ausführungsform der Erfindung ist daher dadurch gekennzeichnet, dass die Analysenvorrichtung einen Probendurchsatz von wenigstens 400 Proben pro Stunde erreicht. Dadurch, dass hierbei auf einen zweiten Reagenzienrotor verzichtet werden kann, wird durch die erfindungsgemäße Analysevorrichtung insbesondere in dem Bereich, in dem die Reagenzienbehälter angeordnet sind, außerdem viel Platz eingespart.

Der Verzicht auf einen zweiten Reagenzienrotor bei gleichzeitiger Steigerung der Probendurchsatzrate wird insbesondere dadurch erreicht, dass es mit der erfindungsgemäßen Vorrichtung möglich ist mehrere Operationen in mehreren Positionen des Prozessrotors gleichzeitig durchzuführen. Die genaue zeitliche Abfolge der Operationen hängt insbesondere von den Erfordernissen des jeweiligen Analyseprozesses (z.B. ggf. zeitlicher Abstand zwischen der Zugabe von erstem und zweitem Reagenz) und von der Größe (Anzahl der Prozessbehälterpositionen) des Prozessrotors ab.

Bei einer speziellen Ausführungsform der Erfindung erfolgt die Zugabe des ersten Reagenz und die Zugabe des zweiten Reagenz in einen bestimmten Prozessbehälter in einem zeitlichen Abstand zueinander. Bei einer Alternative hiervon wird zuerst das erste Reagenz in den bestimmten Prozessbehälter gegeben und dann das zweite Reagenz.

Bei einer Ausführungsform der Erfindung beträgt der Zeitabstand zwischen dem Überführen des ersten Reagenz und dem Überführen des zweiten Reagenz in einen Prozessbehälter > 1 Min. (vorzugsweise > 3 Min.).

Bei einer weiteren speziellen Ausführungsform der erfindungsgemäßen Analysevorrichtung ist es bevorzugt, dass während eines bestimmten Arbeitzyklus bei dem ersten Stop, bei dem die Rotation des Prozessrotors gestoppt wird, eines der beiden Reagenzien in einen Prozessbehälter überführt wird und bei dem zweiten Stop das andere der beiden Reagenzien. Bei einer Alternative hiervon wird bei dem ersten Stop das zweite der beiden Reagenzien in einen Prozessbehälter überführt wird und bei dem zweiten Stop das erste der beiden Reagenzien.

Ein besonders hoher Probendurchsatz kann erreicht werden, wenn in den aufeinanderfolgenden Arbeitszyklen während der beiden Stops jeweils folgende Operationen ausgeführt werden:
- 1. Stop:: Spülen wenigstens eines Prozessbehälters, Überführen einer Probe in einen Prozessbehälter, Überführen des zweiten Reagenz in einen Prozessbehälter, Mischen des Prozessgemischs in einem Prozessbehälter,
- 2. Stop:: Überführen des ersten Reagenz in einen Prozessbehälter.

Ein noch höherer Probendurchsatz kann erreicht werden, wenn die Analysevorrichtung mit aufeinanderfolgenden Arbeitszyklen arbeitet, die sich in die folgenden 4 Phasen unterteilen lassen:
- Phase 1:: Spülen wenigstens eines Prozessbehälters, Überführen einer Probe in einen Prozessbehälter, Überführen des zweiten Reagenz in einen Prozessbehälter, Mischen des Prozessgemischs in einem Prozessbehälter,
- Phase 2:: Messen eines Messparameters des Prozessgemischs in einem Prozessbehälter,
- Phase 3:: Überführen des ersten Reagenz in einen Prozessbehälter und
- Phase 4:: Positionierung des Prozessrotors für den nächsten Arbeitszyklus,
wobei der Prozessrotor während der Phasen 2 und 4 um seine Rotationsachse gedreht wird und der Prozessrotor nur während der Phasen 1 und 3 stillsteht.

Bei solchen Ausführungsformen, bei denen in den Prozessrotor eine Vielzahl von Prozessbehältern eingestellt werden können, beispielsweise mehr als 45, 60 oder 75 Prozessbehälter, ist die Anzahl der Prozessbehälterpositionen auf der Kreisbahn des Prozessrotors vorzugsweise ein Vielfaches von x, wobei x = 3+n ist und n eine ganze Zahl von ≥ 0 ist. Vorzugsweise liegt n in dem Bereich von 0 bis 7. Bei speziellen Ausführungsformen der Erfindung beträgt x = 0, 1 oder 2 (→ n = 3, 4 oder 5).

Bei den vorgenannten Ausführungsformen mit einer Vielzahl von Prozessbehältern sind die Prozessbehälter im Prozessrotor in y Sektoren gruppiert, wobei y = x ist, und wobei in jedem Sektor jeweils eine erste Position für den Prozessbehälter, in dem der Analyseprozess in diesem Sektor zuerst gestartet wird, vorgesehen ist, und auf der Kreisbahn in diesem Sektor nachfolgend weitere Prozessbehälter angeordnet sind, in denen der Analyseprozess der Reihe nach gestartet wird, wobei der Analyseprozess zunächst in der ersten Position des ersten Sektors gestartet wird und anschließend in der jeweiligen ersten Position der anderen Sektoren.

Bei den Ausführungsformen, bei denen die Prozessbehälter in Sektoren gruppiert sind, wird der Prozessrotor zweckmäßigerweise bei jedem vollen Arbeitszyklus um einen Sektor + 1 Prozessbehälterposition oder um 2 oder mehr Sektoren + 1 Prozessbehälterposition gedreht, mit der Maßgabe, dass pro Arbeitszyklus weniger als eine volle Umdrehung durchgeführt wird. Bei 3 Sektoren erfolgt die Drehung beispielsweise um 1/3 der Prozessbehälterpositionen + 1 Prozessbehälterposition oder um 2/3 der Prozessbehälterpositionen + 1 Prozessbehälterposition. Bei 5 Sektoren kann die Drehung um 1/5, 2/5, 3/5 oder 4/5 der Prozessbehälterpositionen + 1 Prozessbehälterposition erfolgen. Hierdurch können die Positionen für die Überführung von Probe und Reagenzien, für das Spülen und Mischen optimal über den gesamten Prozessrotor verteilt und so auch besser von den Pipettierarmen, Rührpaddeln und Spülvorrichtungen erreicht werden.

Auf diese Weise ist es mit der erfindungsgemäßen Analysevorrichtung möglich auch dann noch einen hohen Probendurchsatz zu erreichen, wenn der Prozessrotor aufgrund der hohen Zahl an Probenbehältern einen entsprechend größeren Durchmesser hat. Der Vorteil dieser speziellen Gruppierung der Probenbehälter in Sektoren liegt darin, das in den verschiedenen Sektoren in unmittelbarer zeitlicher Nähe der Analyseprozess in Gang gesetzt werden kann und das während der weiteren Abarbeitung des Analyseprotokolls der Prozessrotor weniger gedreht werden muss als wenn die auf der Kreisbahn nebeneinander angeordneten Prozessbehälter einer nach dem anderen abgearbeitet würden. Dies führt zu einer nicht unerheblichen Zeitersparnis bei großen Prozessrotoren mit einer großen Anzahl an darin angeordneten Prozessbehältern.

Eine Erhöhung des Probendurchsatzes kann außerdem auch dadurch erreicht werden, dass die einzelnen Komponenten der Analysevorrichtung in Bezug auf den Prozessrotor besonders günstig angeordnet sind. Geht man davon aus, dass die Überführung der Probe in einen Prozessbehälter immer in einer Position erfolgt, der ein Mittelpunktswinkel des Prozessrotors von 0° zugeordnet wird, so sind die einzelnen Komponenten am Prozessrotor vorzugsweise so angeordnet, dass:
- die erste Pipettiervorrichtung und die zweite Pipettiervorrichtung im Bereich von 115° bis 175° die Reagenzien in einen Prozessbehälter überführen können,
- die Mischvorrichtung im Bereich von 210° bis 280° das Reaktionsgemisch in einem Prozessbehälter mischen können,
- die Spülvorrichtung im Bereich von 30° bis 100° Prozessbehälter spülen kann,
wobei die angegebenen Winkel als Mittelpunktswinkel gemessen im Uhrzeigersinn ausgehend von der Position bei 0° zu verstehen sind.

Um v.a. Platz zu sparen und eine für Laborzwecke üblicherweise zu bevorzugende längliche Anordnung mit geringer Tiefe zu erreichen, sind die Rotoren vorzugsweise so angeordnet, dass die Verbindungslinien zwischen den Rotationsachsen der nebeneinander angeordneten Rotoren einen Winkel von höchstens 140° bis 180° bilden. Auf diese Weise sind für denjenigen, der Proben oder Reagenzien nachbestücken muss, alle Rotoren von einer Seite der Analysevorrichtung gut zu erreichen, ohne dass über einen der anderen Rotoren gegriffen werden muss.

Die Spülstation der Analysevorrichtung weist vorzugsweise zwei oder mehr Spülpositionen auf, in denen Prozessbehälter gespült werden können. Dies hat den Vorteil, dass an zwei verschiedenen Positionen gleichzeitig Prozessbehälter gespült werden können. Dies hat insbesondere bei großen Prozessrotoren mit in Sektoren gruppierten Prozessbehältern aber auch den Vorteil, dass in verschiedenen Positionen ein Spülvorgang durchgeführt werden kann, je nach dem, in welcher Stellung sich der Prozessrotor gerade befindet. Besonders bevorzugt sind für diese Zwecke in der Spülstation wenigstens 1 Spülposition pro 15 Prozessbehälterpositionen im Prozessrotor vorgesehen ist.

Es hat sich als besonders vorteilhaft herausgestellt, wenn bei den Ausführungsformen, bei denen die Spülstation mehrere Spülpositionen aufweist, diese Spülpositionen in einem geeigneten Abstand zueinander angeordnet sind. Bei den Ausführungsformen, bei denen die Anzahl der Prozessbehälter im Prozessrotor ein Vielfaches von x ist und die Prozessbehälter im Prozessrotor in y Sektoren gruppiert sind, wobei x = y ist, beträgt der Abstand der Spülpositionen zueinander z Prozessbehälterpositionen, wobei z = x ist. Das bedeutet, das beispielsweise in den Fällen, in denen die Prozessbehälter in 3 Sektoren gruppiert sind, alle 3 Prozessbehälterpositionen eine Spülposition in der Spülstation vorgesehen ist, also beispielsweise in den Positionen 1, 4, 7 ... etc..

Besonders bevorzugt weist die Analysevorrichtung eine Mischstation auf, die wenigstens zwei Mischvorrichtungen umfasst, die gleichzeitig das Prozessgemisch in zwei verschiedenen im Prozessrotor angeordneten Prozessbehältern mischen können. Es hat sich gezeigt, dass es bei bestimmten Ausführungsformen besonders vorteilhaft ist, wenn der Abstand zwischen den Prozessbehälterpositionen, in denen die wenigstens zwei Mischvorrichtungen das Prozessgemisch in Prozessbehältern gleichzeitig mischen können > 3 beträgt.

Bei einer speziellen Ausführungsform der Erfindung erfolgt eine Vorverdünnung der Probe. Hierfür wird von einer der Pipettiervorrichtungen eine Verdünnungsflüssigkeit in einen leeren Prozessbehälter (Verdünnungsbehälter) eingebracht. In diesen Verdünnungsbehälter wird dann später die ursprüngliche Probe überführt und die Probe und die Verdünnungsflüssigkeit werden gemischt und die verdünnte Probe wird von der Pipettiervorrichtung aufgezogen. Im folgenden Arbeitszyklus wird dann die verdünnte Probe zur weiteren Durchführung des Analysepozesses in einen Prozessbehälter überführt.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Weitere Merkmale oder Merkmalsgruppen sowie Beispiele für mögliche denkbare Merkmalskombinationen werden anhand der folgenden Beschreibung der beiliegenden Figuren offenbart bzw. veranschaulicht.

Hierbei zeigen:
- Figur 1: eine schematische Darstellung einer Ausführungsform der erfindungsgemäßen automatisierten Analysevorrichtung und
- Figur 2: eine schematische Darstellung der Prozessbehälterpositionen im Prozessrotor bei einer Ausführungsform der erfindungsgemäßen automatisierten Analysevorrichtung.

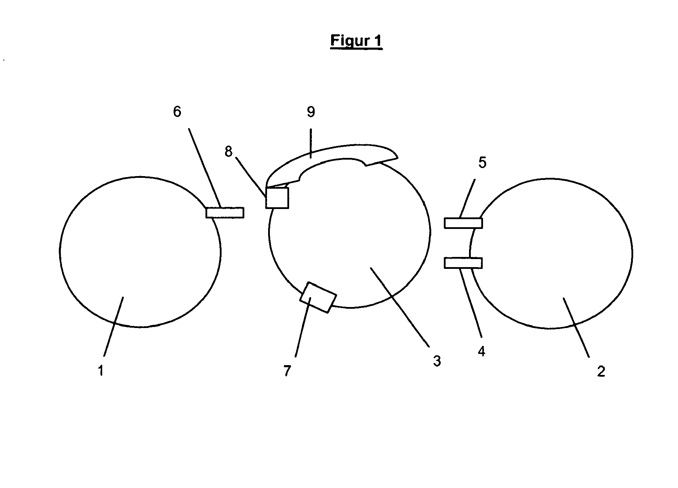

In Figur 1 ist eine Ausführungsform der erfindungsgemäßen automatisierten Analysevorrichtung schematisch dargestellt. Die Analysevorrichtung weist genau drei Rotoren auf, nämlich einen Probenrotor 1 für Probenbehälter, einen Reagenzienrotor 2 für Reagenzienbehälter und einen Prozessrotor 3 für Prozessbehälter.

Zwischen dem Probenrotor 1 und dem Prozessrotor 3 ist eine Pipettiervorrichtung 6 zum Überführen der Probe aus den Probenbehältern in die Prozessbehälter vorgesehen. Hierbei handelt es sich bei dieser Ausführungsform um einen Pipettierarm 6, der um eine Rotationsachse drehbar ist und dessen distales Ende, an dem eine Pipettiernadel am Pipettierarm 6 angeordnet ist, sich in der Darstellung von Figur 1 in der Position befindet, in der eine Probe aus einem Probenbehälter im Probenrotor 1 aufgenommen werden kann. Um die aufgenommene Probe in einen Prozessbehälter im Prozessrotor 3 zu überführen kann der Pipettierarm 6 nach rechts geschwenkt werden, so dass sich dessen distales Ende mit der dort angeordneten Pipettiernadel in einer Position befindet, in der die Probe in einen Prozessbehälter überführt werden kann.

Zwei weitere Pipettiervorrichtung 4, 5 sind zwischen dem Reagenzienrotor 2 und dem Prozessrotor 3 vorgesehen, um Reagenzien aus den im Reagenzienrotor 2 angeordneten Reagenzienbehältern in Prozessbehälter im Prozessrotor 3 zu überführen. Bei der hier dargestellten Ausführungsform sind auch diese beiden Pipettiervorrichtungen jeweils als Pipettierarm 4, 5, der um eine Rotationsachse drehbar ist und der an seinem distalen Ende eine Pipettiernadel aufweist, ausgestaltet. In der Darstellung von Figur 1 befinden sich beide Pipettierarme 4, 5 in der Position, in der Reagenzien aus Reagenzienbehältern im Reagenzienrotor 2 aufgenommen werden können. Um die aufgenommenen Reagenzien in einen Prozessbehälter im Prozessrotor 3 zu überführen können die beiden Pipettierarme 4, 5 nach rechts geschwenkt werden, so dass sich deren distales Ende mit der dort angeordneten Pipettiernadel in einer Position befinden, in der die Reagenzien in einen Prozessbehälter überführt werden können.

Darüber hinaus weist die Analysevorrichtung eine am Prozessrotor angeordnete Mischvorrichtung 7 zum Mischen des Prozessgemisches auf. Die Mischvorrichtung umfasst eine Antriebseinheit, die zwei Mischpaddel in Bewegung setzen kann. Die Mischpaddel sind so angeordnet, dass sie in einem Abstand voneinander in zwei verschiedene Prozessbehälter eingetaucht werden können, um das Prozessgemisch in diesen Behältern gleichzeitig zu mischen.

Bei der hier dargestellten Analysevorrichtung ist die am Prozessrotor angeordnete Messvorrichtung 8 zum Messen eines Messparameters des Prozessgemisches ein Photometer. Dementsprechend sind die bei dieser Ausführungsform verwendeten Prozessbehälter als Küvetten ausgestaltet. Im vorliegenden Fall ist das Photometer 8 unmittelbar neben der Spülvorrichtung 9 vorgesehen. Die Position des Photometers 8 ist jedoch grundsätzlich über den gesamten Umfang des Prozessrotors frei wählbar, da die photometrische Messung gemäß der vorliegenden Erfindung "im Flug" erfolgt, d.h. während sich der Prozessrotor dreht.

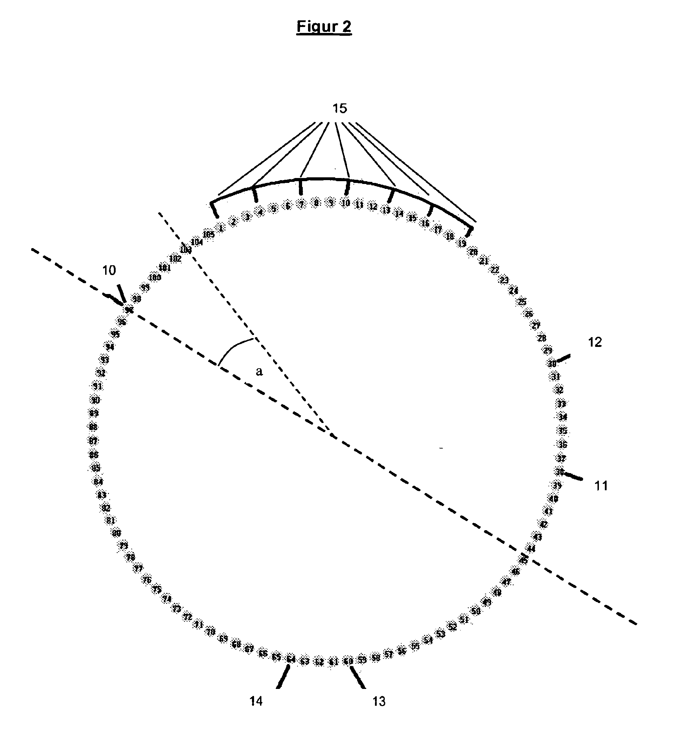

Des weiteren ist am Prozessrotor 3 noch eine Spülvorrichtung 9 zum Spülen von Prozessbehältern angeordnet. Diese Spülvorrichtung 9 weist vorzugsweise mehrere Spülpositionen zum gleichzeitigen Spülen von mehreren Prozessbehältern bzw. Küvetten auf. Ein Beispiel für eine mögliche Anordnung von mehreren Spülpositionen in einer solchen Vorrichtung ist in Figur 2 wiedergegeben.

In der schematischen Darstellung von Figur 2 sind die Prozessbehälterpositionen im Prozessrotor bei einer bestimmten Ausführungsform der erfindungsgemäßen automatisierten Analysevorrichtung dargestellt, wobei diese spezielle Zuordnung der verschiedenen Positionen insbesondere im Falle eines Prozessrotors mit 105 Prozessbehälterpositionen bevorzugt ist.

Ausgehend von der äußerst linken Spülposition 15 in der Spülvorrichtung sind die verschiedenen Prozessbehälterpositionen fortlaufend nummeriert. Der Prozessbehälter, der sich in der äußerst linken Spülposition 15 in der Spülvorrichtung befindet steht damit in der Prozessbehälterposition 1. Der Abstand zwischen den verschiedenen Spülpositionen beträgt immer 2 Prozessbehälterpositionen, so dass sich in jeder dritten Position eine Spülposition befindet (hier Positionen 1, 4, 7, 10, 13, 16 und 19).

In Prozessbehälterposition 30 (Bezugszeichen 12) ist bei dieser Stellung des Prozessrotors die Position für das Überführen des zweiten Reagenz in den gerade in dieser Position befindlichen Prozessbehälter. In Prozessbehälterposition 38 (Bezugszeichen 11) ist bei dieser Stellung des Prozessrotors die Position für das Überführen des ersten Reagenz in den gerade in dieser Position befindlichen Prozessbehälter.

In den Prozessbehälterpositionen 60 und 64 (Bezugszeichen 13 und 14) ist bei dieser Stellung des Prozessrotors die Position für das Überführen des zweiten Reagenz in den gerade in dieser Position befindlichen Prozessbehälter.

In Prozessbehälterposition 97 (Bezugszeichen 10) ist bei dieser Stellung des Prozessrotors die Position für das Überführen der Probe in den gerade in dieser Position befindlichen Prozessbehälter. Durch diese Position verläuft auch die gedachte Achse, die die Ausgangslinie für die Messung von Mittelpunktswinkeln a im Prozessrotor definiert (siehe oben).

### Beispiel für eine besonders bevorzugte Arbeitsweise einer speziellen Ausführungsform der erfindungsgemäßen Analysevorrichtung:

Die folgende Beschreibung eines Beispiels für eine besonders bevorzugte Arbeitsweise einer speziellen Ausführungsform der erfindungsgemäßen Analysevorrichtung bezieht sich auf eine Ausführungsform mit einem Prozessbehälterrotor, der 105 Prozessbehälter mit den Prozessbehälterpositionen aufweist, wie sie in Figur 2 angegeben sind.

Die Anzahl der Prozessbehälter im Prozessrotor ist damit ein Vielfaches von 3, und die Prozessbehälter im Prozessrotor sind in 3 Sektoren gruppiert, wobei in jedem Sektor jeweils eine erste Position für den Prozessbehälter, in dem der Analyseprozess in diesem Sektor zuerst gestartet wird, vorgesehen ist, und auf der Kreisbahn in diesem Sektor nachfolgend weitere Prozessbehälter angeordnet sind, in denen der Analyseprozess der Reihe nach gestartet wird, wobei der Analyseprozess zunächst in der ersten Position des ersten Sektors gestartet wird und anschließend in der jeweiligen ersten Position der anderen Sektoren.

Das Arbeitsverfahren, nach dem die Analysevorrichtung arbeitet, besteht aus mehreren aufeinanderfolgenden Arbeitszyklen. Diese Arbeitszyklen dauern jeweils nur 9 Sekunden und bestehen aus insgesamt 4 Phasen, während der die Rotation des Prozessrotors pro Arbeitszyklus insgesamt nur zwei mal gestoppt wird. Im einzelnen werden in den einzelnen Phasen jedes Arbeitszyklus folgende Operationen durchgeführt:
- Phase 1:: Spülen bzw. Trocken der Prozessbehälter in den Positionen 1 und 4 (Trocknen) und 7, 10, 13, 16 und 19 (Spülen), Überführen einer Probe in den Prozessbehälter in Position 97, Überführen des zweiten Reagenz in den Prozessbehälter in Position 30, Mischen des Prozessgemischs in den Prozessbehältern in den Positionen 60 und 64,
- Phase 2:: Messen eines Messparameters des Prozessgemischs in einem Prozessbehälter,
- Phase 3:: Überführen des ersten Reagenz in den Prozessbehälter in Position 38 und
- Phase 4:: Positionierung des Prozessrotors für den nächsten Arbeitszyklus.

Bei dem oben beschriebenen Verfahren wird der Prozessrotor nur während der Phasen 2 und 4 um seine Rotationsachse gedreht, und in den Phasen 1 und 3 steht der Prozessrotor still.

Bei jedem vollen Arbeitszyklus wird der Prozessrotor um 71 Positionen gedreht (∼ 243°). Das entspricht 2/3 der gesamten Prozessbehälterpositionen + 1 Prozessbehälterposition. Hierdurch sind die Positionen für die Überführung von Probe und Reagenzien, für das Spülen und Mischen optimal über den gesamten Prozessrotor verteilt und können so besser von den Pipettierarmen, Rührpaddeln und Spülvorrichtungen erreicht werden.

Da der Prozessrotor bei jedem Arbeitszyklus um ca. 243° gedreht wird, wird der Prozessrotor alle 2 Arbeitszyklen, d.h. alle 18 Sekunden mindestens einmal vollständig um seine Rotationsachse gedreht. Daher kann die Position des Photometers am Prozessrotor auch beliebig gewählt werden. Denn jeder im Prozessrotor eingestellte Prozessbehälter wird spätestens in jedem zweiten Arbeitszyklus einmal an der Position des Photometers vorbeigeführt werden, so dass dann die photometrische Messung "im Flug" erfolgen kann, d.h. während sich der jeweilige Prozessbehälter im Prozessrotor an der Photometerposition vorbeibewegt.

Aus praktischen Gründen ist das Photometer vorzugsweise in etwa in dem Bereich gegenüber der Spülvorrichtung, wie sie in der Figur 2 dargestellt ist, angeordnet.

### Beispiel für eine speziellen Ausführungsform der erfindungsgemäßen Analysevorrichtung bei der während der Arbeitszyklen zusätzlich eine Vorverdünnung der Probe erfolgt:

Bei einer speziellen Ausführungsform der Erfindung erfolgt eine Vorverdünnung der Probe. Hierfür wird von der Pipettiervorrichtung für das erste Reagenz eine Verdünnungsflüssigkeit in einen leeren Prozessbehälter (Verdünnungsbehälter) eingebracht. 3 Zyklen später wird von dieser Pipettiervorrichtung das erste Reagenz in einen leeren Prozessbehälter überführt. In den Verdünnungsbehälter wird dann von der Probenpipettiervorrichtung während der Phase 1 die ursprüngliche Probe überführt, die Probe und die Verdünnungsflüssigkeit werden gemischt, und in demselben Zyklus wird die verdünnte Probe von der Probenpipettiervorrichtung aus dem Verdünnungsbehälter aufgezogen. Im folgenden Arbeitszyklus wird dann die verdünnte Probe zur weiteren Durchführung des Analyseprozesses in einen Prozessbehälter überführt.

### Bezugszeichenliste:

- 1: Probenrotor
- 2: Reagenzienrotor
- 3: Prozessrotor
- 4: Erste Reagenzienpipettiervorrichtung
- 5: Zweite Reagenzienpipettiervorrichtung
- 6: Probenpipettiervorrichtung
- 7: Mischvorrichtung
- 8: Messvorrichtung
- 9: Spülvorrichtung
- 10: Position für das Überführen einer Probe in einen Prozessbehälter
- 11: Position für das Überführen des ersten Reagenz in einen Prozessbehälter
- 12: Position für das Überführen des zweiten Reagenz in einen Prozessbehälter
- 13: Erste Position für das Mischen eines Prozessgemischs in einem Prozessbehälter
- 13: Zweite Position für das Mischen eines Prozessgemischs in einem Prozessbehälter
- 14: Positionen für das Spülen eines Prozessbehälters

## Patentansprüche

1. Verfahren zur automatisierten Analyse von Füssigkeiten mit einer automatisierten Analysevorrichtung mit den folgenden Komponenten:
a) genau drei Rotoren, nämlich einem Probenrotor für Probenbehälter, einem Reagenzienrotor für Reagenzienbehälter und einem Prozessrotor für Prozessbehälter,
b) einer ersten Pipettiervorrichtung zum Überführen eines ersten Reagenz aus den Reagenzienbehältem in die Prozessbehälter, einer zweiten Pipettiervorrichtung zum Überführen eines zweiten Reagenz aus den Reagenzienbehältem in die Prozessbehälter und einer dritten Pipettiervorrichtung zum Überführen der Probe aus den Probenbehältem in die Prozessbehälter,
c) einer am Prozessrotor angeordneten Mischvorrichtung zum Mischen des Prozessgemisches,
d) einer am Prozessrotor angeordneten Messvorrichtung zum Messen eines Messparameters des Prozessgemisches und
e) einer am Prozessrotor angeordneten Spülvorrichtung zum Spülen von Prozessbehältem,
wobei die Analysevorrichtung bei dem Verfahren in aufeinanderfolgenden Arbeitszyklen arbeitet, bei denen der Prozessrotor um seine Rotationsachse gedreht wird, wobei in jedem Arbeitszyklus in verschiedenen Prozessbehältern an verschiedenen Positionen des Prozessrotors gleichzeitig die folgenden Operationen durchgeführt werden:
- Überführen einer Probe in einen Prozessbehäfter,
- Überführen des ersten Reagenz in einen Prozessbehälter,
- Überführen des zweiten Reagenz in einen Prozessbehälter,
- Mischen des Prozessgemischs in einem Prozessbehälter,
- Messen eines Messparameters des Prozessgemischs in einem Prozessbehälter und
- Spülen wenigstens eines Prozessbehälters,
wobei die Rotation des Prozessrotors pro Arbeitszyklus höchstens zwei mal gestoppt wird, um eine Probe sowie das erste und das zweite Reagenz in einen Prozessbehälter zu überführen.

2. Verfahren nach Anspruch 1, **dadurch gekennzeichnet, dass** in den aufeinanderfolgenden Arbeitszyklen während der beiden Stops jeweils folgende Operationen ausgeführt werden:
1. Stop: Spülen wenigstens eines Prozessbehälters, Überführen einer Probe in einen Prozessbehälter, Überführen des zweiten Reagenz in einen Prozessbehälter, Mischen des Prozessgemischs in einem Prozessbehälter,
2. Stop: Überführen des ersten Reagenz in einen Prozessbehälter.

3. Verfahren nach einem der Ansprüche 1 oder 2, **dadurch gekennzeichnet, dass** die aufeinanderfolgenden Arbeitszyklen in die folgenden 4 Phasen unterteilt sind:
Phase 1: Spülen wenigstens eines Prozessbehälters, Überführen einer Probe in einen Prozessbehälter, Überführen des zweiten Reagenz in einen Prozessbehälter, Mischen des Prozessgemischs in einem Prozessbehälter,
Phase 2: Messen eines Messparameters des Prozessgemischs in einem Prozessbehälter,
Phase 3: Überführen des ersten Reagenz in einen Prozessbehälter und
Phase 4: Positionierung des Prozessrotors für den nächsten Arbeitszyklus,
wobei der Prozessrotor nur während der Phasen 2 und 4 um seine Rotationsachse gedreht wird.

4. Verfahren nach einem der Ansprüche 1 bis 3, **dadurch gekennzeichnet, dass** die Anzahl der Prozessbehälterpositionen auf der Kreisbahn des Prozessrotors der Analysevorrichtung ein Vielfaches von x ist, wobei x = 3+n ist und n eine ganze Zahl von ≥ 0 ist, und die Prozessbehälter im Prozessrotor in y Sektoren gruppiert sind, wobei y = x ist, und wobei in jedem Sektor jeweils eine erste Position für den Prozessbehälter, in dem der Analyse-prozess in diesem Sektor zuerst gestartet wird, vorgesehen ist, und auf der Kreisbahn in diesem Sektor nachfolgend weitere Prozessbehälter angeordnet sind, in denen der Analyseprozess der Reihe nach gestartet wird, wobei der Analyseprozess zunächst in der ersten Position des ersten Sektors gestartet wird und anschließend in der jeweiligen ersten Position der anderen Sektoren.

5. Verfahren nach einem der Ansprüche 1 bis 4, **dadurch gekennzeichnet, dass** die einzelnen Komponenten der Analysevorrichtung in Bezug auf den Prozessrotor so angeordnet sind, dass, wenn die Überführung der Probe in einen Prozessbehälter in einer Position bei einem Mittelpunktswinkel des Prozessrotors von 0° erfolgt:
- die erste Pipettiervorrichtung und die zweite Pipettiervorrichtung im Bereich von 115° bis 175° die Reagenzien in einen Prozessbehälter überführen können,
- die Mischvorrichtung im Bereich von 210° bis 280° das Reaktionsgemisch in einem Prozessbehälter mischen können,
- die Spülvorrichtung im Bereich von 30° bis 100° Prozessbehälter spülen kann.

6. Verfahren nach einem der Ansprüche 1 bis 5, **dadurch gekennzeichnet, dass** die Spülstation der Analysevorrichtung zwei oder mehr Spülpositionen aufweist, so dass an zwei verschiedenen Positionen Prozessbehälter gespült werden können.

7. Verfahren nach Anspruch 6, **dadurch gekennzeichnet, dass** in der Spülstation der Analysevorrichtung wenigstens 1 Spülposition pro 15 Prozessbehälterpositionen im Prozessrotor vorgesehen ist.

8. Verfahren nach einem der Ansprüche 6 oder 7, **dadurch gekennzeichnet, dass** die Anzahl der Prozessbehälter im Prozessrotor der Analysevorrichtung ein Vielfaches von x ist, wobei x = 3+n ist und n eine ganze Zahl von ≥ 0 ist, und die Prozessbehälter im Prozessrotor in y Sektoren gruppiert sind, wobei y = x ist, der Abstand der Spülpositionen zueinander z Prozessbehälterpositionen beträgt, wobei z = x ist.

9. Verfahren nach einem der Ansprüche 1 bis 8, **dadurch gekennzeichnet, dass** die Mischstation der Analysevorrichtung wenigstens zwei Mischvorrichtungen zum Mischen des Prozessgemischs in zwei Prozessbehälter gleichzeitig aufweist.

10. Verfahren nach Anspruch 9 **dadurch gekennzeichnet, dass** der Abstand zwischen den Prozessbehälterpositionen, in denen die wenigstens zwei Mischvorrichtungen das Prozessgemischs in Prozessbehältern der Analysevorrichtung mischen können > 3 beträgt.

11. Verfahren nach einem der Ansprüche 1 bis 10, **dadurch gekennzeichnet, dass** die Messvorrichtung der Analysevorrichtung ein Photometer ist.

12. Verfahren nach einem der Ansprüche 1 bis 11, **dadurch gekennzeichnet, dass** der Zeitabstand zwischen dem Überführen des ersten Reagenz und dem Überführen des zweiten Reagenz in einen Prozessbehälter der Analysevorrichtung > 1 Min. beträgt.

13. Verfahren nach einem der Ansprüche 1 bis 12, **dadurch gekennzeichnet, dass** die Dauer eines Arbeitszyklus höchstens 15s beträgt.

14. Verfahren nach einem der Ansprüche 1 bis 13, **dadurch gekennzeichnet, dass** die Analysenvorrichtung einen Probendurchsatz von wenigstens 400 Proben pro Stunde erreicht.

## Claims

1. Method for automated analysis of fluids with an automated analysis apparatus having the following components:
a) precisely three rotors, namely a sample rotor for sample containers, a reagent rotor for reagent containers and a process rotor for process containers,
b) a first pipetting device for transferring a first reagent out of the reagent containers into the process containers, a second pipetting device for transferring a second reagent out of the reagent containers into the process containers and a third pipetting device for transferring the sample from the sample containers into the process containers,
c) a mixing device arranged at the process rotor for mixing the process mixture,
d) a measuring device arranged at the process rotor for measuring a measurement parameter of the process mixture, and
e) a flushing device arranged at the process rotor for flushing process containers,
wherein the analysis apparatus operates in successive operating cycles in which the process rotor is rotated about its axis of rotation, wherein the following operations are simultaneously carried out in each operating cycle in different process containers at different positions of the process rotor:
- transferring a sample into a process container,
- transferring the first reagent into a process container,
- transferring the second reagent into a process container,
- mixing the process mixture in a process container,
- measuring a measurement parameter of the process mixture in a process container, and
- flushing at least one process container,
wherein the rotation of the process rotor is stopped at most twice per operating cycle in order to transfer a sample and the first and second reagents into a process container.

2. Method according to claim 1, **characterized in that** the respective following operations are performed in the successive operating cycles during the two stops:
First stop: flushing at least one process container, transferring a sample into a process container, transferring the second reagent into a process container, mixing the process mixture in a process container,
Second stop: transferring the first reagent into a process container.

3. Method according to one of claims 1 and 2 **characterized in that** the successive operating cycles are sub-divided into the following 4 phases:
Phase 1: flushing at least one process container, transferring a sample into a process container, transferring the second reagent into a process container, mixing the process mixture in a process container,
Phase 2: measuring a measurement parameter of the process mixture in a process container,
Phase 3: transferring the first reagent into a process container, and
Phase 4: positioning the process rotor for the next operating cycle,
wherein the process rotor is rotated about its axis of rotation only during phases 2 and 4.

4. Method according to one of claims 1 to 3 **characterized in that** the number of process container positions on the circular path of the process rotor of the analysis apparatus is a multiple of x, wherein x = 3 + n and n is a whole number of ≥ 0, and the process containers in the process rotor are grouped in y sectors, wherein y = x, and wherein provided in each sector is a respective first position for the process container in which the analysis process is firstly started in said sector and successively arranged on the circular path in said sector are further process containers in which the analysis process is successively started, wherein the analysis process is firstly started in the first position of the first sector and then in the respective first position of the other sectors.

5. Method according to one of claims 1 to 4 **characterized in that** the individual components of the analysis apparatus are so arranged in relation to the process rotor that when transfer of the sample into a process container is effected in a position at a center point angle of the process rotor of 0°:
- the first pipetting device and the second pipetting device can transfer the reagents into a process container in a region of 115° to 175°,
- the mixing device can mix the reaction mixture in a process container in the region of 210° to 280°,
- the flushing device can flush process containers in the region of 30° to 100°.

6. Method according to one of claims 1 to 5 **characterized in that** the flushing station has two or more flushing positions so that process containers can be flushed at two different positions.

7. Method according to claim 6 **characterized in that** provided in the flushing station of the analysis apparatus is at least 1 flushing position per 15 process container positions in the process rotor.

8. Method according to one of claims 6 or 7 **characterized in that** in the embodiments in which the number of process containers in the process rotor of the analysis apparatus is a multiple of x, wherein x = 3 + n and n is a whole number of ≥ 0, and the process containers are grouped in the process rotor in y sectors, wherein y = x, the spacing of the flushing positions relative to each other is z process container positions, wherein z = x.

9. Method according to one of claims 1 to 8 **characterized in that** the mixing station of the analysis apparatus has at least two mixing devices for mixing the process mixture in two process containers at the same time.

10. Method according to claim 9 **characterized in that** the spacing between the process container positions in which the at least two mixing devices can mix the process mixture in the process containers of the analysis apparatus is > 3.

11. Method according to one of claims 1 to 10 **characterized in that** the measuring device of the analysis apparatus is a photometer.

12. Method according to one of claims 1 to 11 **characterized in that** the time spacing between transfer of the first reagent and transfer of the second reagent into a process container of the analysis apparatus is > 1 min.

13. Method according to one of claims 1 to 12 **characterized in that** the duration of an operating cycle is at most 15s.

14. Method according to one of claims 1 to 13 **characterized in that** the analysis apparatus achieves a sample throughput of at least 400 samples per hour.

## Revendications

1. Procédé pour l'analyse automatisée de fluides au moyen d'un dispositif d'analyse automatisée, comprenant les composants suivants :
a) exactement trois rotors, à savoir un rotor d'échantillons pour récipients à échantillons, un rotor de réactifs pour récipients à réactifs et un rotor de traitement pour récipients de traitement,
b) un premier dispositif de pipetage pour le transfert d'un premier réactif depuis les récipients à réactifs dans les récipients de traitement, un second dispositif de pipetage pour le transfert d'un second réactif depuis les récipients à réactifs dans les récipients de traitement et un troisième dispositif de pipetage pour le transfert de l'échantillon depuis les récipients à échantillons dans les récipients de traitement,
c) un dispositif de mélange disposé au niveau du rotor de traitement et servant à mélanger le mélange de traitement,
d) un dispositif de mesure disposé au niveau du rotor de traitement et servant à mesurer un paramètre de mesure du mélange de traitement, et
e) un dispositif de rinçage disposé au niveau du rotor de traitement et servant à rincer des récipients de traitement,
le dispositif d'analyse fonctionnant, dans le procédé, en cycles de travail successifs dans lesquels le rotor de traitement est entraîné en rotation autour de son axe de rotation, les opérations suivantes étant exécutées simultanément dans chaque cycle de travail dans différents récipients de traitement à différentes positions du rotor de traitement :
- transfert d'un échantillon dans un récipient de traitement,
- transfert du premier réactif dans un récipient de traitement,
- transfert du second réactif dans un récipient de traitement,
- mélange du mélange de traitement dans un récipient de traitement,
- mesure d'un paramètre de mesure du mélange de traitement dans un récipient de traitement, et
- rinçage d'au moins un récipient de traitement,
la rotation du rotor de traitement par cycle de travail étant stoppée au maximum deux fois pour transférer un échantillon ainsi que le premier et le second réactif dans un récipient de traitement.

2. Procédé selon la revendication 1, **caractérisé en ce que** les opérations suivantes sont exécutées respectivement pendant les deux arrêts lors des cycles de travail successifs :
1^{er} arrêt : rinçage d'au moins un récipient de traitement, transfert d'un échantillon dans un récipient de traitement, transfert du second réactif dans un récipient de traitement, mélange du mélange de traitement dans un récipient de traitement,
2^{ème} arrêt : transfert du premier réactif dans un récipient de traitement.

3. Procédé selon l'une des revendications 1 ou 2, **caractérisé en ce que** les cycles de travail successifs sont subdivisés en 4 phases, comme suit :
Phase 1 : rinçage d'au moins un récipient de traitement, transfert d'un échantillon dans un récipient de traitement, transfert du second réactif dans un récipient de traitement, mélange du mélange de traitement dans un récipient de traitement,
Phase 2 : mesure d'un paramètre de mesure du mélange de traitement dans un récipient de traitement,
Phase 3 : transfert du premier réactif dans un récipient de traitement, et
Phase 4 : positionnement du rotor de traitement pour le cycle de travail suivant,
le rotor de traitement n'étant entraîné en rotation autour de son axe de rotation que pendant les phases 2 et 4.

4. Procédé selon l'une des revendications 1 à 3, **caractérisé en ce que** le nombre de positions de récipients de traitement sur la trajectoire circulaire du rotor de traitement du dispositif d'analyse est un multiple de x, x étant égal à 3+n et n étant un nombre entier de ≥ 0, et **en ce que** les récipients de traitement dans le rotor de traitement sont groupés en y secteurs, y étant égal à x, et dans chaque secteur est prévue respectivement une première position pour le récipient de traitement dans lequel le processus d'analyse est tout d'abord démarré dans ce secteur, et sur la trajectoire circulaire sont disposés successivement dans ce secteur d'autres récipients de traitement dans lesquels le processus d'analyse est démarré en suivant l'ordre, le processus d'analyse étant tout d'abord démarré dans la première position du premier secteur, et ensuite dans la première position respective des autres secteurs.

5. Procédé selon l'une des revendications 1 à 4, **caractérisé en ce que** les différents composants du dispositif d'analyse sont disposés par rapport au rotor de traitement de façon telle que, lorsque le transfert de l'échantillon dans un récipient de traitement s'effectue dans une position située à un angle central du rotor de traitement de 0° :
- le premier dispositif de pipetage et le deuxième dispositif de pipetage peuvent transférer les réactifs dans un récipient de traitement dans la plage de 115° à 175°,
- le dispositif de mélange peut mélanger le mélange réactionnel dans un récipient de traitement dans la plage de 210° à 280°,
- le dispositif de rinçage peut rincer des récipients de traitement dans la plage de 30° à 100°.

6. Procédé selon l'une des revendications 1 à 5, **caractérisé en ce que** la station de rinçage du dispositif d'analyse présente deux positions de rinçage ou plus de façon à ce que des récipients de traitement puissent être rincés à deux positions différentes.

7. Procédé selon la revendication 6, **caractérisé en ce qu'**est prévue dans la station de rinçage du dispositif d'analyse au moins 1 position de rinçage pour 15 positions de récipients de traitement dans le rotor de traitement.

8. Procédé selon l'une des revendications 6 ou 7, **caractérisé en ce que** le nombre de récipients de traitement dans le rotor de traitement du dispositif d'analyse est un multiple de x, x étant égal à 3+n et n étant un nombre entier de ≥ 0, et **en ce que** les récipients de traitement dans le rotor de traitement sont groupés en y secteurs, y étant égal à x, la distance entre les positions de rinçage comportant z positions de récipients de traitement, z étant égal à x.

9. Procédé selon l'une des revendications 1 à 8, **caractérisé en ce que** la station de mélange du dispositif d'analyse présente au moins deux dispositifs de mélange pour mélanger le mélange de traitement simultanément dans deux récipients de traitement.

10. Procédé selon la revendication 9, **caractérisé en ce que** la distance entre les positions de récipients de traitement, dans lesquelles les dispositifs de mélange, au moins au nombre de deux, peuvent mélanger le mélange de traitement dans des récipients de traitement du dispositif d'analyse, est > 3.

11. Procédé selon l'une des revendications 1 à 10, **caractérisé en ce que** le dispositif de mesure du dispositif d'analyse est un photomètre.

12. Procédé selon l'une des revendications 1 à 11, **caractérisé en ce que** l'intervalle de temps entre le transfert du premier réactif et le transfert du second réactif dans un récipient de traitement du dispositif d'analyse est > 1 minute.

13. Procédé selon l'une des revendications 1 à 12, **caractérisé en ce que** la durée d'un cycle de travail est de 15 s maximum.

14. Procédé selon l'une des revendications 1 à 13, **caractérisé en ce que** le dispositif d'analyse atteint un débit d'échantillons d'au moins 400 échantillons à l'heure.
